# FASCICULE DE BREVET EUROPEEN

(11) **EP 0 780 434 B1**
(45) Date de publication et mention de la délivrance du brevet: **29.03.2000**
(21) Numéro de dépôt: 96203519.2
(22) Date de dépôt: 12.12.1996
(51) Int. Cl.: C08L 53/00, C08L 23/12

(54) **Compositions à base de polymères du propylène et leur utilisation**
Zusammensetzungen auf der Basis von Propylenpolymeren und ihre Verwendung
Compositions based on polymers of propylene and their use

(30) Priorité: 21.12.1995 BE 9501060
(43) Date de publication de la demande: 25.06.1997
(73) Titulaire: Solvay Polyolefins Europe-Belgium (Société Anonyme), 1050 Bruxelles (BE)
(72) Inventeur: Mikielski, Raymond, 1310 La Hulpe (BE); Libert, Daniel, Houston, TX 77042 (US)
(74) Mandataire: Troch, Geneviève

(56) Documents cités:
- EP-A- 0 110 505
- EP-A- 0 636 650
- DE-A- 1 569 360
- GB-A- 958 079

## Description

L'invention concerne une composition à base de polymères du propylène. Elle concerne également son utilisation pour le façonnage d'objets par moulage par injection.

Divers objets façonnés par moulage par injection, comme par exemple des pièces rigides dans l'industrie automobile, doivent présenter simultanément un module d'élasticité en flexion élevé et une bonne résistance au choc. En plus, pour des problèmes liés au recyclage, une uniformisation des matières premières utilisées pour la fabrication de ces objets est de plus en plus recherchée.

Des polymères du propylène ayant un module d'élasticité en flexion élevé sont connus, mais, en général, leur résistance au choc est faible. Des copolymères du propylène ayant une bonne résistance au choc sont également connus, mais, en général, leur module d'élasticité en flexion est très faible. La demande de brevet EP-A-0 636 650 divulgue génériquement des compositions comprenant de 10 à 90 % en poids d'un polymère du propylène hautement isotactique et de 90 à 10 % en poids d'un copolymère séquencé du propylène dont la fraction soluble, à 23 °C dans le n-décane, est de 5 à 13 % en poids et contient de 30 à 50 % molaires d'unités d'éthylène. De telles compositions présentent un bon compromis module d'élasticité en flexion/résistance au choc. Toutefois, les compositions donnant les meilleurs compromis sont telles que le polymère hautement isotactique contient environ 0,02 mole % de 3-méthyl-1-butène. Or la mise en oeuvre d'un tel comonomère est très coûteuse et difficile. En plus, le compromis module d'élasticité en flexion/résistance au choc laisse encore à désirer.

On a maintenant trouvé des compositions à base de polymères du propylène qui ne présentent pas les inconvénients décrits ci-dessus et qui permettent d'obtenir des objets façonnés qui présentent simultanément un module d'élasticité en flexion élevé et une bonne résistance au choc.

à cet effet, la présente invention concerne une composition comprenant un mélange de polymères du propylène constitué de :
. 15 à 85 % en poids d'un polymère du propylène (A) dont l'indice d'isotacticité est d'au moins 0,95, et
. 85 à 15 % en poids d'un copolymère séquencé (B) qui est constitué d'un premier bloc choisi parmi les polymères cristallins du propylène et d'un second bloc choisi parmi les copolymères propylène/éthylène, ledit copolymère séquencé (B) ayant une fraction soluble dans le n-décane, mesurée à 23 °C, au moins égale à 14 % en poids et ne dépassant pas 30 % en poids.

Par fraction soluble dans le n-décane, à 23 °C, appelée ci-après fraction soluble, on entend désigner la fraction pondérale du copolymère séquencé (B) soluble dans le n-décane, qui est mesurée suivant la méthode décrite ci-après. Cette méthode consiste à disperser, dans un ballon sous agitation, 2 g du copolymère séquencé (B) dans 500 g de n-décane porté à ébullition, à pression atmosphérique, afin de solubiliser le copolymère (B), puis à plonger le ballon dans un bain thermostatisé à 23 °C pendant 0,5 heure afin de refroidir la solution résultante, à la filtrer sur un verre fritté G-4, à récolter la solution et à la sécher, d'abord dans un rotavapor, puis dans une étuve à vide, pour déterminer la quantité de copolymère séquencé (B) soluble. La fraction soluble dans le n-décane est exprimée par le pourcentage en poids de cette quantité soluble par rapport au poids total du copolymère séquencé (B) mis en oeuvre.

Le polymère du propylène (A) mis en oeuvre dans la composition selon l'invention présente, de manière préférée, un indice d'isotacticité, au moins égal à 0,96. L'indice d'isotacticité du polymère est apprécié par la fraction molaire de triades isotactiques selon la méthode décrite ci-après en rapport avec les exemples. Les polymères du propylène ayant un indice d'isotacticité au moins égal à 0,97 sont particulièrement préférés. Généralement, l'indice d'isotacticité ne dépasse pas 0,99, de préférence pas 0,98.

Le polymère du propylène (A) utilisé de préférence ne contient que des unités monomériques dérivées du propylène.

D'une manière préférée, le polymère du propylène (A) présente une température de fusion d'au moins environ 162 °C, plus particulièrement d'au moins 163 °C.

D'une manière préférée, le polymère du propylène (A) présente un indice de fluidité en fondu, mesuré sous une charge de 2,16 kg à 230 °C, suivant la norme ASTM D 1238, et appelé ci-après plus simplement MFI, d'au moins 2 g/10 min, et ne dépassant pas 30 g/10 min. D'une manière plus préférée, le MFI du polymère du propylène (A) est d'au moins 4 g/10 min, et plus particulièrement d'au moins 5 g/10 min. Le MFI ne dépasse, de manière préférée, pas 25 g/10 min, plus particulièrement, il ne dépasse pas 15 g/10 min.

D'une manière préférée, la quantité du polymère du propylène (A) dans le mélange de polymères du propylène est d'au moins 50 % en poids. Tout particulièrement préféré est un mélange qui comprend au moins 55 % en poids du polymère du propylène (A). D'une manière préférée, le mélange ne comprend pas plus que 75 % en poids du polymère du propylène (A). Tout particulièrement préféré est un mélange qui ne comprend pas plus que 70 % en poids du polymère du propylène (A). De bons résultats ont été obtenus quand la quantité de polymère du propylène (A) dans le mélange de polymères du propylène est d'au moins 50 % et ne dépasse pas 75 % en poids du poids du mélange.

On met en oeuvre un copolymère séquencé (B) dont la fraction soluble est au moins égale à 14 %, et plus particulièrement au moins égale à 16 %, en poids. En général, cette fraction soluble ne dépasse pas 30 % en poids. Tout particulièrement préféré est un copolymère (B) dont la fraction soluble ne dépasse pas 25 % en poids. De bons résultats ont été obtenus quand la fraction soluble dans le n-décane du copolymère séquencé (B) est au moins égale à 16 % et ne dépasse pas 25 % en poids.

D'une manière préférée, on met en oeuvre un copolymère séquencé (B) qui a une teneur totale en éthylène d'au moins 5 % en poids. Par teneur totale en éthylène du copolymère séquencé (B) on entend désigner la teneur en éthylène mesurée par infrarouge selon la méthode décrite ci-après en rapport avec les exemples. De bons résultats ont été obtenus quand le copolymère séquencé (B) a une teneur totale en éthylène au moins égale à 5 % en ne dépassant pas 30 % en poids. D'une manière particulièrement préférée, on met en oeuvre un copolymère séquencé (B) ayant une teneur totale en éthylène d'au moins 6 % en poids et plus particulièrement d'au moins 7 % en poids. Le copolymère séquencé (B) a en outre une teneur en éthylène qui ne dépasse, en général, pas 30 % en poids, de préférence pas 22 % en poids. Tout particulièrement préféré est un copolymère (B) ayant une teneur totale en éthylène ne dépassant pas 12 % en poids.

D'une manière préférée, on met en oeuvre un copolymère séquencé (B) dont le premier bloc est constitué d'un polymère du propylène qui ne contient que des unités monomériques dérivées du propylène.

D'une manière préférée, on met en oeuvre un copolymère séquence (B) dont le second bloc est constitué d'un copolymère élastomérique du propylène et de l'éthylène. De bons résultats ont été obtenus quand la teneur en éthylène du second bloc du copolymère séquencé (B) est d'au moins 30 % et ne dépasse pas 70 % en poids par rapport au poids du second bloc. De préférence, la teneur en éthylène du second bloc est d'au moins 40 % en poids par rapport au poids du second bloc. D'une manière avantageuse, la teneur en éthylène du second bloc ne dépasse pas 60 % en poids d'éthylène par rapport au poids du second bloc. En général, le second bloc représente moins de 50 % en poids du poids total du copolymère séquencé (B). De manière préférée, la quantité en second bloc ne dépasse pas 45 %, et plus particulièrement pas 40 %, en poids du poids total du copolymère séquencé (B). En général, le second bloc représente au moins 10 %, et plus particulièrement au moins 15 %, en poids du poids total du copolymère séquencé (B).

Les copolymères séquencés (B) ayant donné de bons résultats dans les compositions selon l'invention sont des copolymères séquencés dont le premier bloc est un polymère du propylène ne contenant que des unités monomériques dérivées du propylène et qui contient de 15 à 40 % en poids de second bloc choisi parmi les copolymères propylène/éthylène comprenant de 40 à 60 % en poids d'unités d'éthylène.

D'une manière préférée, on met en oeuvre un copolymère séquencé (B) dont le MFI est d'au moins 2 g/10 min et qui ne dépasse pas 25 g/10 min. D'une manière plus préférée, le MFI du copolymère séquencé (B) est d'au moins 4 g/10 min, et plus particulièrement d'au moins 5 g/10 min. D'une manière plus préférée, ledit MFI ne dépasse pas 20 g/10 min, et plus particulièrement, il ne dépasse pas 14 g/10 min.

Les polymères du propylène (A) et les copolymères séquencés (B) sont bien connus de l'homme du métier. De préférence, ils sont obtenus par polymérisation au moyen de systèmes catalytiques comprenant un solide à base de trichlorure de titane, un alkylaluminium et éventuellement un donneur d'électrons. Ces systèmes catalytiques ont notamment été décrits dans les demandes de brevet EP-A-0261727 (SOLVAY) et EP-A-0334411 (SOLVAY) et dans les brevets US-A-5204305 (SOLVAY) et US-A-4210729 (SOLVAY).

Les copolymères séquencés (B) ayant donné de très bons résultats sont ceux obtenus par polymérisation séquencée du propylène et d'un mélange propylène/éthylène au moyen d'un système catalytique comprenant un solide catalytique à base de trichlorure de titane complexé, de forme cristalline à obtenu par traitements, successifs ou combinés, du solide issu de la réduction de tétrachlorure de titane par un réducteur organoaluminique, tel que le chlorure de diéthylaluminium, par un composé électrodonneur, tel que l'éther diisoamylique, et par un composé halogéné, tel que le tétrachlorure de titane. Le solide catalytique décrit ci-dessus a été décrit dans le brevet US-4,210,729. Le solide catalytique à base de trichlorure de titane complexé, tel que décrit ci-dessus, a de préférence également subi une prépolymérisation au moyen de propylène et une étape d'activation par un agent d'activation de la famille des organoaluminiques, tel que le chlorure de diéthylaluminium. Les copolymères séquencés (B) ayant donné les meilleurs résultats sont ceux obtenus par polymérisation séquencée du propylène et d'un mélange propylène/éthylène au moyen du solide catalytique décrit ci-dessus en suspension dans un diluant hydrocarboné inerte, tel que l'hexane, le butane, le pentane ou l'heptane.

Les mélanges de polymères du propylène qui ont donné de bons résultats sont ceux dont la teneur totale en éthylène est d'au moins 2 % en poids par rapport au poids total du mélange de polymères du propylène. De préférence, cette teneur en éthylène du mélange est d'au moins 2,5 %, et plus particulièrement d'au moins 3 %, en poids. La teneur totale en éthylène du mélange de polymères du propylène ne dépasse, généralement, pas 10 % en poids. De préférence, cette teneur en éthylène ne dépasse pas 8 %, et plus particulièrement pas 6 %, en poids. De bons résultats ont été obtenus quand le mélange de polymères du propylène a une teneur totale en éthylène d'au moins 2 % et qui ne dépasse pas 10 % en poids.

Les compositions selon l'invention contiennent avantageusement au moins 50 % en poids du mélange de polymères du propylène constitué du polymère du propylène (A) et du copolymère séquencé (B) par rapport au poids total de la composition. Selon une variante préférée de la composition selon l'invention, la composition contient au moins 90 % en poids du mélange de polymères du propylène constitué du polymère du propylène (A) et du copolymère séquencé (B) par rapport au poids total de la composition. Particulièrement préférée est une composition qui contient au moins 95 % en poids du mélange de polymères du propylène. Tout particulièrement préférée est une composition qui contient au moins 97 % en poids du mélange de polymères du propylène.

Outre le mélange de polymères du propylène, la composition selon l'invention peut également contenir des additifs. La composition peut notamment contenir des charges usuelles, telles que par exemple du talc. du noir de carbone et du carbonate de calcium précipité. Dans ce cas, la teneur en charges de la composition ne dépasse, en général, pas 50 % en poids du poids total de la composition. La composition selon l'invention peut contenir des ingrédients habituellement présents dans les compositions à base de polymère du propylène, tels que des stabilisants, des pigments, des anti-acides et des agents de nucléation. La quantité de ces ingrédients ne dépasse, en général, pas 5 % en poids et de préférence pas 3 % en poids du poids total de la composition.

Des compositions ayant donné de très bons résultats sont celles qui contiennent au moins 95 % en poids du mélange de polymères du propylène, ledit mélange étant constitué de 55 à 70 % en poids d'un polymère du propylène (A) ne contenant que des unités monomériques dérivées du propylène et de 45 à 30 % en poids d'un copolymère (B) dont le premier bloc est un polymère du propylène ne contenant que des unités monomériques dérivées du propylène et qui contient de 15 à 40 % en poids de second bloc choisi parmi les copolymères propylène/éthylène comprenant de 40 à 60 % en poids d'unités d'éthylène.

La composition selon la présente invention peut être obtenue par mélange mécanique ou chimique du polymère du propylène (A) et du copolymère séquencé (B) et des additifs éventuels, par toute technique connue appropriée. Le plus souvent la composition est obtenue par mélange du polymère du propylène (A) et du copolymère séquencé (B) à l'état fondu. Généralement le mélange est effectué à une température ne dépassant pas 300 °C, de préférence pas 280 °C. La température minimale à laquelle le mélange en fondu est effectué est généralement supérieure à 180 °C, de préférence supérieure à 200 °C. Le mélange peut être effectué dans tous dispositifs connus à cet effet. Le mélange est de préférence effectué dans un mélangeur du type extrudeuse. Le mélange de polymères du propylène constitué du polymère du propylène (A) et du copolymère séquencé (B) peut aussi être obtenu par polymérisation des différents monomères en plusieurs étapes successives en présence de catalyseurs Ziegler-Natta. Selon une variante, le polymère (A) est obtenu lors de la première étape de polymérisation tandis que le copolymère (B) est obtenu ultérieurement en présence du polymère (A).

La composition selon l'invention convient particulièrement bien pour être mise en oeuvre par injection. Dans ce cas, il est avantageux que le mélange de polymères du propylène présente un MFI de 2 à 80 g/10 min. D'une manière plus préférée, le MFI du mélange est d'au moins 3 g/10 min, et plus particulièrement d'au moins 7 g/10 min. Le MFI ne dépasse, de manière préférée, pas 65 g/10 min. et plus particulièrement pas 35 g/10 min. Les meilleurs résultats ont été obtenus avec un mélange de polymères du propylène présentant un MFI de 10 à 65 g/10 min. En général, il est possible d'ajuster le MFI du mélange en ajustant les quantités respectives et les MFI du polymère du propylène (A) et du copolymère séquencé (B). Il est également possible d'ajuster le MFI du mélange par n'importe quelle méthode connue dans l'état de la technique, notamment par traitement de dépolymérisation au moyen de peroxydes.

La composition selon la présente invention permet d'obtenir des produits façonnés ayant simultanément un module d'élasticité en flexion élevé et une bonne résistance au choc dans une large gamme de valeurs de module d'élasticité.

La présente invention concerne également l'utilisation d'une composition à base de polymères du propylène selon l'invention pour le façonnage d'objets par moulage par injection, tels que, par exemple, des pièces pour automobiles.

Les exemples suivants servent à illustrer l'invention.

Dans ces exemples, la composition selon l'invention est obtenue à l'aide d'une extrudeuse à double vis corotative de type WERNER & PFLEIDERER ZSK 58. La température de la zone d'alimentation est 220 °C et la température de la zone de mélange est de 260 °C.
La signification des symboles utilisés dans ces exemples, les unités exprimant les grandeurs mentionnées et les méthodes de mesure de ces grandeurs sont explicitées ci-dessous.
Indice d'isotacticité = fraction molaire de triades isotactiques (enchaînement séquencé de trois unités monomériques de propylène en configuration méso) dans le polymère du propylène total. Cette valeur est déterminée par résonance magnétique nucléaire en ¹³C connue décrit dans Macromolecules, volume 6, no.6, pages 925-926 (1973) et dans les références (3) à (9) de cette publication.
La teneur en éthylène est mesurée par spectrométrie infra-rouge et est définie comme étant la somme des teneurs relatives en éthylène qui sont évaluées par l'absorbance des bandes caractéristiques à 720 cm⁻¹ et à 740 cm⁻¹.
Flex.mod. = le module d'élasticité en flexion mesuré, à 23 °C, sur une éprouvette injectée, d'une épaisseur de 4 mm, suivant la norme ISO 178.
IZOD = résilience IZOD, résistance au choc mesurée sur éprouvette entaillée à 23 °C suivant la norme ISO 180/1A.
T.frag. = température de fragilité mesurée suivant la norme ASTM D 746
DDT = résistance au choc biaxial (Dart Drop Test) mesurée suivant la norme DIN 53443/partie 1.

### Exemple 1

On a alimenté l'extrudeuse avec une composition contenant
- 60 kg d'un homopolymère du propylène (A) présentant un indice d'isotacticité de 0.97 et une température de fusion de 163 °C. Son MFI est de 9,2 g/10 min.
- 40 kg d'un copolymère séquence du propylène (B) comprenant 80 % en poids d'un premier bloc constitué d'un homopolymère du propylène et 20 % en poids d'un second bloc d'un copolymère élastomérique éthylène/propylène comprenant 45 % en poids d'éthylène. Ce copolymère séquencé du propylène a été obtenu par polymérisation en continu dans l'hexane au moyen d'un système catalytique comprenant du chlorure de diéthylaluminium et un solide catalytique à base de trichlorure de titane complexé, de forme cristalline δ, prépolymérisé avec du propylène et préactivé par du chlorure de diéthylaluminium. Ce copolymère présente un MFI de 5,7 g/10 min. Ce copolymère a une fraction soluble dans le n-décane de 22 % en poids. La fraction soluble dans le n-décane contient 49 % molaire d'éthylène (valeur mesurée par RMN ¹³C) et présente une viscosité intrinsèque mesurée dans le décahydronaphtalène à 135 °C, de 1,73 dl/g.
- 150 g du stabilisant IRGANOX® B 215.
- 60 g d'hydrotalcite DHT4-A.
- 100 g de benzoate de soude.
- 6 g de 2,5-diméthyl-2,5-di-tertbutylperoxyhexane.

Le tableau I reprend les caractéristiques mécaniques de la composition ainsi obtenue.

### Exemple 2

On a alimenté l'extrudeuse avec une composition contenant :
- 65 kg de l'homopolymère du propylène (A) décrit à l'exemple 1,
- 35 kg du copolymère séquencé du propylène (B) décrit à l'exemple 1,
- 150 g du stabilisant IRGANOX® B 215;
- 60 g d'hydrotalcite DHT4-A;
- 100 g de benzoate de soude;
- 24 g de 2,5-diméthyl-2,5-di-tertbutylperoxyhexane.

Le tableau I reprend les caractéristiques mécaniques de la composition ainsi obtenue.

### Exemple 3R (de comparaison)

On a alimenté l'extrudeuse avec une composition contenant :
- 100 kg de l'homopolymère du propylène (A) décrit à l'exemple 1,
- 150 g du stabilisant IRGANOX® B 215;
- 60 g d'hydrotalcite DHT4-A;
- 100 g de benzoate de soude;

Le tableau I reprend les caractéristiques mécaniques de la composition ainsi obtenue.

### Exemple 4R (de comparaison)

On a alimenté l'extrudeuse avec une composition contenant :
- 100 kg du copolymère séquencé du propylène (B) décrit à l'exemple 1,
- 150 g du stabilisant IRGANOX® B 215;
- 60 g d'hydrotalcite DHT4-A;
- 100 g de benzoate de soude;
- 9 g de 2,5-diméthyl-2,5-di-tertbutylperoxyhexane.

Le tableau I reprend les caractéristiques mécaniques de la composition ainsi obtenue.

**TABLEAU I**

| | | ex. 1 | ex. 2 | ex. 3R | ex. 4R |
|---|---|---|---|---|---|
| MFI | g/10 min | 18,1 | 32 | 9,2 | 11,9 |
| Mod. élast. | MPa | 1952 | 1959 | 2312 | 1217 |
| IZOD | kJ/m² | 4,2 | 3,44 | 2,47 | >12 |
| T. frag. | °C | 12 | 15 | >23 | -31 |
| DDT à 0 °C | J | 17 | 4,2 | <2,5 | >80 |
| DDT à 23 °C | J | 22 | 8,3 | <2,5 | >80 |

Les résultats présentés dans le tableau I montrent que les compositions selon l'invention des exemples 1 et 2 présentent, à la fois, une bonne résistance au choc (IZOD) et un module d'élasticité en flexion élevé.

### Exemple 5

On a alimenté l'extrudeuse avec une composition contenant :
- 60 kg d'un homopolymère du propylène (A) tel que décrit à l'exemple 1.
- 40 kg d'un copolymère séquencé du propylène (B') obtenu par polymérisation en continu dans l'hexane au moyen d'un système catalytique comprenant du chlorure de diéthylaluminium et un solide catalytique à base de trichlorure de titane complexé, de forme cristalline δ, prépolymérisé avec du propylène et préactivé par du chlorure de diéthylaluminium. Ce copolymère séquencé comprend 9 % en poids d'éthylène, présente un MFI de 7,3 g/10 min et a une fraction soluble dans le n-décane de 18 % en poids.
- 150 g du stabilisant IRGANOX® B 215.
- 60 g d'hydrotalcite DHT4-A.
- 100 g de benzoate de soude.

Le tableau II reprend les caractéristiques mécaniques de la composition ainsi obtenue.

### Exemple 6

On a alimenté l'extrudeuse avec une composition telle que décrite à l'exemple 5 sauf que le copolymère (B') a été remplacé par un copolymère séquencé (B") obtenu par polymérisation en continu en phase gazeuse au moyen de TiCl₄ supporté sur du MgCl₂ (catalyseur SHAC 201 commercialisé par la société PECTEN) en présence de triéthylaluminium et un silane. Le copolymère séquencé du propylène (B") comprend 9 % en poids d'éthylène, présente un MFI de 7 g/10 min et a une fraction soluble dans le n-décane de 18 % en poids.

Le tableau II reprend les caractéristiques mécaniques de la composition ainsi obtenue.

**TABLEAU II**

| | | ex. 5 | ex. 6 |
|---|---|---|---|
| MFI | g/10 min | 7,9 | 8,4 |
| Mod. élast. | MPa | 1759 | 1681 |
| IZOD | kJ/m² | 5,2 | 4 |
| DDT à 0 °C | J | 13 | 21 |
| DDT à 23 °C | J | 26 | 28 |

Les résultats présentés dans le tableau II montrent que la composition de l'exemple 5 comprenant un copolymère séquencé (B') présente un module d'élasticité en flexion plus élevé que celle de l'exemple 6.

## Revendications

1. Composition comprenant un mélange de polymères du propylène constitué de
. 15 à 85 % en poids d'un polymère du propylène (A) dont l'indice d'isotacticité est d'au moins 0,95, et
. 85 à 15 % en poids d'un copolymère séquencé (B) qui est constitué d'un premier bloc choisi parmi les polymères cristallins du propylène et d'un second bloc choisi parmi les copolymères propylène/éthylène, ledit copolymère séquencé (B) ayant une fraction soluble dans le n-décane, mesurée à 23 °C, au moins égale à 14 % et ne dépassant pas 30 % en poids.

2. Composition selon la revendication 1, caractérisée en ce que le polymère du propylène (A) présente un indice d'isotacticité au moins égal à 0,96.

3. Composition selon la revendication 1 ou 2, caractérisée en ce que le polymère du propylène (A) ne contient que des unités monomériques dérivées du propylène.

4. Composition selon l'une quelconque des revendications 1 à 3, caractérisée en ce que le polymère du propylène (A) présente une température de fusion au moins égale à environ 163 °C.

5. Composition selon l'une quelconque des revendications 1 à 4, caractérisée en ce que la quantité de polymère du propylène (A) dans le mélange de polymères du propylène est d'au moins 50 % et ne dépasse pas 75 % en poids du poids du mélange.

6. Composition selon l'une quelconque des revendications 1 à 5, caractérisée en ce que la fraction soluble dans le n-décane du copolymère séquencé (B) est au moins égale à 16 % et ne dépasse pas 25 % en poids.

7. Composition selon l'une quelconque des revendications 1 à 6, caractérisée en ce que le copolymère séquencé (B) a une teneur totale en éthylène au moins égale à 5 % en ne dépassant pas 30 % en poids.

8. Composition selon l'une quelconque des revendications 1 à 7, caractérisée en ce que le premier bloc du copolymère séquencé (B) ne contient que des unités monomériques dérivées du propylène.

9. Composition selon l'une quelconque des revendications 1 à 8, caractérisée en ce que la teneur en éthylène du second bloc du copolymère séquencé (B) est d'au moins 30 % et ne dépasse pas 70 % en poids par rapport au poids du second bloc.

10. Composition selon l'une quelconque des revendications 1 à 9, caractérisée en ce que le second bloc représente moins de 50 % en poids du poids total du copolymère séquencé (B).

11. Composition selon l'une quelconque des revendications 1 à 10, caractérisée en ce que le mélange de polymères du propylène a une teneur totale en éthylène d'au moins 2 % et qui ne dépasse pas 10 % en poids.

12. Composition selon l'une quelconque des revendications 1 à 11, caractérisée en ce que le mélange de polymères du propylène présente un indice de fluidité en fondu mesuré sous une charge de 2,16 kg à 230 °C de 10 à 65 g/10 min.

13. Composition selon l'une quelconque des revendications 1 à 12, caractérisée en ce qu'elle contient au moins 90 % en poids du mélange de polymères du propylène.

14. Composition selon la revendication 13, caractérisé en ce qu'elle contient au moins 95 % en poids du mélange de polymères du propylène, ledit mélange étant constitué de 55 à 70 % en poids d'un polymère du propylène (A) ne contenant que des unités monomériques dérivées du propylène et de 45 à 30 % en poids d'un copolymère (B) dont le premier bloc est un polymère du propylène ne contenant que des unités monomériques dérivées du propylène et qui contient de 15 à 40 % en poids de second bloc choisi parmi les copolymères propylène/éthylène comprenant de 40 à 60 % en poids d'unités d'éthylène.

15. Utilisation d'une composition selon l'une quelconque des revendications 1 à 14 pour le façonnage d'objets par moulage par injection.

## Patentansprüche

1. Zusammensetzung, die ein Gemisch von Propylenpolymeren umfaßt, das besteht aus:
- 15 bis 85 Gew.-% eines Propylenpolymers (A), dessen Isotaktizitätszahl wenigstens 0,95 beträgt, und
- 85 bis 15 Gew.-% eines Blockcopolymers (B), das aus einem ersten Block besteht, der unter den kristallinen Propylenpolymeren ausgewählt ist, und einem zweiten Block, der unter den Propylen/Ethylen-Copolymeren ausgewählt ist, wobei besagtes Blockcopolymer (B) einen in n-Decan löslichen Anteil besitzt, der, gemessen bei 23 °C, wenigstens gleich 14 Gew.-% ist und 30 Gew.-% nicht übersteigt

2. Zusammensetzung gemäß Anspruch 1, dadurch gekennzeichnet, daß das Propylenpolymer (A) eine Isotaktizitätszahl aufweist, die wenigstens gleich 0,96 ist.

3. Zusammensetzung gemäß Anspruch 1 oder 2, dadurch gekennzeichnet, daß das Propylenpolymer (A) nur von Propylen abgeleitete Monomereinheiten enthält.

4. Zusammensetzung gemäß einem der Ansprüche 1 bis 3, dadurch gekennzeichnet, daß das Propylenpolymer (A) eine Schmelztemperatur aufweist, die wenigstens gleich etwa 163 °C ist.

5. Zusammensetzung gemäß einem der Ansprüche 1 bis 4, dadurch gekennzeichnet, daß die Menge an Propylenpolymer (A) in dem Gemisch von Propylenpolymeren wenigstens 50 Gew.-% beträgt und 75 Gew.-% des Gewichts des Gemischs nicht übersteigt.

6. Zusammensetzung gemäß einem der Ansprüche 1 bis 5, dadurch gekennzeichnet, daß der in n-Decan lösliche Anteil des Blockcopolymers (B) wenigstens gleich 16 Gew.-% ist und 25 Gew.-% nicht übersteigt.

7. Zusammensetzung gemäß einem der Ansprüche 1 bis 6, dadurch gekennzeichnet, daß das Blockcopolymer (B) einen Gesamtgehalt an Ethylen aufweist, der wenigstens gleich 5 Gew.-% ist und 30 Gew.-% nicht übersteigt.

8. Zusammensetzung gemäß einem der Ansprüche 1 bis 7, dadurch gekennzeichnet, daß der erste Block des Blockcopolymers (B) nur von Propylen abgeleitete Monomereinheiten enthält.

9. Zusammensetzung gemäß einem der Ansprüche 1 bis 8, dadurch gekennzeichnet, daß der Gehalt an Ethylen des zweiten Blocks des Blockcopolymers (B), bezogen auf das Gewicht des zweiten Blocks, wenigstens 30 Gew.-% beträgt und 70 Gew.-% nicht übersteigt.

10. Zusammensetzung gemäß einem der Ansprüche 1 bis 9, dadurch gekennzeichnet, daß der zweite Block weniger als 50 Gew.-% des Gesamtgewichts des Blockcopolymers (B) darstellt.

11. Zusammensetzung gemäß einem der Ansprüche 1 bis 10, dadurch gekennzeichnet, daß das Gemisch von Propylenpolymeren einen Gesamtgehalt an Ethylen aufweist, der wenigstens 2 Gew.-% beträgt und 10 Gew.-% nicht übersteigt.

12. Zusammensetzung gemäß einem der Ansprüche 1 bis 11, dadurch gekennzeichnet, daß das Gemisch von Propylenpolymeren eine Fließzahl in der Schmelze, gemessen unter einer Last von 2,16 kg bei 230 °C, von 10 bis 65 g/10 min aufweist.

13. Zusammensetzung gemäß einem der Ansprüche 1 bis 12, dadurch gekennzeichnet, daß sie wenigstens 90 Gew.-% des Gemischs von Propylenpolymeren enthält.

14. Zusammensetzung gemäß Anspruch 13, dadurch gekennzeichnet, daß sie wenigstens 95 Gew.-% des Gemischs von Propylenpolymeren enthält, wobei besagtes Gemisch aus 55 bis 70 Gew.-% eines Propylenpolymers (A), das nur von Propylen abgeleitete Monomereinheiten enthält, und aus 45 bis 30 Gew.-% eines Copolymers (B) besteht, dessen erster Block ein Propylenpolymer, das nur von Propylen abgeleitete Monomereinheiten enthält, ist, und das 15 bis 40 Gew.-% zweiten Block enthält, der unter den Propylen/Ethylen-Copolymeren ausgewählt ist, die 40 bis 60 Gew.-% Ethyleneinheiten umfassen.

15. Verwendung einer Zusammensetzung gemäß einem der Ansprüche 1 bis 14 zur Formung von Gegenständen durch Spritzguß.

## Claims

1. Composition comprising a mixture of propylene polymers, consisting of
- from 15 to 85% by weight of a propylene polymer (A) whose isotactic index is at least 0.95, and
- from 85 to 15% by weight of a block copolymer (B) which consists of a first block chosen from crystalline propylene polymers and of a second block chosen from propylene-ethylene copolymers, the said block copolymer (B) having a fraction soluble in n-decane, measured at 23°C, of at least 14% and not exceeding 30%.

2. Composition according to Claim 1, characterized in that the propylene polymer (A) has an isotactic index of at least 0.96.

3. Composition according to Claim 1 or 2, characterized in that the propylene polymer (A) contains only monomeric units derived from propylene.

4. Composition according to any one of Claims 1 to 3, characterized in that the propylene polymer (A) has a melting point of at least approximately 163°C.

5. Composition according to any one of Claims 1 to 4, characterized in that the quantity of propylene polymer (A) in the mixture of propylene polymers is at least 50% and does not exceed 75% by weight, relative to the weight of the mixture.

6. Composition according to any one of Claims 1 to 5, characterized in that the fraction soluble in n-decane of the block copolymer (B) is at least 16% and does not exceed 25% by weight.

7. Composition according to any one of Claims 1 to 6, characterized in that the block copolymer (B) has a total ethylene content which is at least 5% and does not exceed 30% by weight.

8. Composition according to any one of Claims 1 to 7, characterized in that the first block of the block copolymer (B) contains only monomeric units derived from propylene.

9. Composition according to any one of Claims 1 to 8, characterized in that the ethylene content of the second block of the block copolymer (B) is at least 30% and does not exceed 70% by weight, relative to the weight of the second block.

10. Composition according to any one of Claims 1 to 9, characterized in that the second block represents less than 50% by weight of the total weight of the block copolymer (B).

11. Composition according to any one of Claims 1 to 10, characterized in that the mixture of propylene polymers has a total ethylene content which is at least 2% and does not exceed 10% by weight.

12. Composition according to any one of Claims 1 to 11, characterized in that the mixture of propylene polymers has a melt flow index, measured under a load of 2.16 kg at 230°C, of from 10 to 65 g/10 min.

13. Composition according to any one of Claims 1 to 12, characterized in that it contains at least 90% by weight of the mixture of propylene polymers.

14. Composition according to Claim 13, characterized in that it contains at least 95% by weight of the mixture of propylene polymers, the said mixture consisting of from 55 to 70% by weight of a propylene polymer (A) containing only monomeric units derived from propylene and from 45 to 30% by weight of a copolymer (B) whose first block is a propylene polymer containing only monomeric units derived from propylene, and which contains from 15 to 40% by weight of a second block chosen from propylene-ethylene copolymers comprising from 40 to 60% by weight of ethylene units.

15. Use of a composition according to any one of Claims 1 to 14 for the manufacture of articles by injection moulding.
